# EUROPEAN PATENT APPLICATION

(11) **EP 4 428 770 A1**
(43) Date of publication of application: **11.09.2024**
(21) Application number: 24160298.6
(22) Date of filing: 28.02.2024
(51) Int. Cl.: G06N 20/00, G06N 3/0895, G06N 5/01

(54) **IDENTIFYING RECURRING EVENTS USING AUTOMATED SEMI-SUPERVISED CLASSIFIERS**

(30) Priority: 28.02.2023 US 202363448965 P; 16.02.2024 US 202418444445
(71) Applicant: Intuit Inc., Mountain View, CA 94043 (US)
(72) Inventor: ZHUO, Yuan, Mountain View (US); SHASHIKANT RAO, Shashank, Mountain View (US); KALLUR PALLI KUMAR, Sricharan, Mountain View (US)
(74) Representative: D Young & Co LLP

(57) **Abstract**

Systems and methods for training machine learning models are disclosed. An example method includes receiving historical event timing data including event data for a first portion including events from a first time period, and a second portion comprising events from a second time period not including the first time period, predicting, based on the first portion of the historical event timing data, a first plurality of predicted events, the first plurality of predicted events corresponding to the second time period, determining a first subset of predicted events to be accurate predictions based at least in part on comparing the first plurality of predicted events to the historical events occurring within the second time period, generating training data based at least in part on the first subset of the first plurality of predicted events, and training the machine learning model based at least in part on the training data.

## Description

### CROSS-REFERENCE TO RELATED APPLICATIONS

This Patent Application claims priority to U.S. Provisional Patent Application No. 63/448,965 entitled "IDENTIFYING RECURRING EVENTS USING AUTOMATED SEMI-SUPERVISED CLASSIFIERS" and filed on February 28, 2023, which is assigned to the assignee hereof. The disclosure of the Provisional Patent Application is incorporated in its entirety by reference herein.

### TECHNICAL FIELD

This disclosure relates generally to methods for training machine learning models, and more particularly to training machine learning models for identifying recurring events.

### DESCRIPTION OF RELATED ART

Machine learning techniques are increasingly trained based on large data sets. As such, both efficiency and accuracy are important considerations for generating and using training data to train machine learning models based on such large data sets. In many such data sets, important features may be associated with cycles, such as being based on time cycles, for example daily, weekly, monthly, quarterly, or yearly time cycles.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

One innovative aspect of the subject matter described in this disclosure can be implemented as a method for training a machine learning model to identify recurring events. An example method may be performed by an electronic device coupled to a machine learning model and may include receiving historical event timing data indicating times associated with occurrences of a first plurality of events, the historical event timing data including a first portion indicating events occurring within a first time period and a second portion indicating events occurring during a second time period that does not include the first time period. The method further includes predicting, based on the first portion of the historical event timing data, a first plurality of predicted events corresponding to the second time period, determining a first subset of the first plurality of predicted events as accurate predictions based at least in part on comparing the first plurality of predicted events to the events occurring within the second time period, generating training data based at least in part on the first subset of the first plurality of predicted events, and training the machine learning model based at least in part on the training data.

In some aspects, predicting the first plurality of predicted events includes generating a first Fourier transform based on the first portion of the historical event timing data. In some aspects, the training data includes magnitudes and frequencies associated with the first Fourier transform.

In some aspects, the first subset of the first plurality of predicted events includes the predicted events having at least a threshold similarity to corresponding events occurring within the second time period. In some aspects, the threshold similarity is determined based at least in part on a predicted event having a date within a threshold time period of a corresponding event within the second time period. In some aspects, the threshold similarity is determined based at least in part on a predicted event corresponding to an amount within a threshold amount of a corresponding event within the second time period. In some aspects, the threshold similarity is determined based at least in part on a predicted event having a common identifier with a corresponding event within the second time period.

In some implementations, the method further includes determining one or more recurring series of events within the first subset of the first plurality of predicted events, where each recurring series of events includes events occurring at an identified periodicity, and where at least a threshold proportion of the predicted events in a recurring series have at least the threshold similarity to the corresponding events within the second time period. In some aspects, generating the training data further includes identifying one or more heuristic filters for filtering the one or more recurring series of events, where the one or more heuristic filters are configured to identify a subset of the one or more recurring series of events. In some aspects, the events include transactions between a first transacting party and a second transacting party, and the one or more heuristic filters are based on a rule that a number of unique days on which the transactions occur in a respective recurring series of events is at least a threshold proportion of a total number of unique days that the first party transacts with the second party.

In some other implementations, the method further includes receiving current event timing data indicating times associated with occurrence of a first plurality of current events, identifying one or more potentially recurring series of events based at least in part on the current event timing data, and determining, using the trained machine learning model, whether or not to identify each of the one or more potentially recurring series of events as a confirmed recurring series of events. In some aspects, identifying the one or more potentially recurring series of events includes identifying a first plurality of statistically recurring series of events based at least in part on a Fourier transform of the current event timing data and applying one or more heuristic filters to the statistically recurring series of events.

Another innovative aspect of the subject matter described in this disclosure can be implemented as a system for training a machine learning model to identify recurring events. The system may be associated with a machine learning model and may include one or more processors and a memory storing instructions for execution by the one or more processors. Execution of the instructions causes the system to perform operations including receiving historical event timing data indicating times associated with occurrences of a first plurality of events, the historical event timing data including a first portion indicating events occurring within a first time period and a second portion indicating events occurring during a second time period that does not include the first time period. The operations further include predicting, based on the first portion of the historical event timing data, a first plurality of predicted events corresponding to the second time period, determining a first subset of the first plurality of predicted events as accurate predictions based at least in part on comparing the first plurality of predicted events to the events occurring within the second time period, generating training data based at least in part on the first subset of the first plurality of predicted events, and training the machine learning model based at least in part on the training data.

In some aspects, predicting the first plurality of predicted events includes generating a first Fourier transform based on the first portion of the historical event timing data. In some aspects, the training data includes magnitudes and frequencies associated with the first Fourier transform.

In some aspects, the first subset of the first plurality of predicted events includes the predicted events having at least a threshold similarity to corresponding events occurring within the second time period. In some aspects, the threshold similarity is determined based at least in part on a predicted event having a date within a threshold time period of a corresponding event within the second time period. In some aspects, the threshold similarity is determined based at least in part on a predicted event corresponding to an amount within a threshold amount of a corresponding event within the second time period. In some aspects, the threshold similarity is determined based at least in part on a predicted event having a common identifier with a corresponding event within the second time period.

In some implementations, the operations further include determining one or more recurring series of events within the first subset of the first plurality of predicted events, where each recurring series of events includes events occurring at an identified periodicity, and where at least a threshold proportion of the predicted events in a recurring series have at least the threshold similarity to the corresponding events within the second time period. In some aspects, generating the training data further includes identifying one or more heuristic filters for filtering the one or more recurring series of events, where the one or more heuristic filters are configured to identify a subset of the one or more recurring series of events. In some aspects, the events include transactions between a first transacting party and a second transacting party, and the one or more heuristic filters are based on a rule that a number of unique days on which the transactions occur in a respective recurring series of events is at least a threshold proportion of a total number of unique days that the first party transacts with the second party.

In some other implementations, the operations further include receiving current event timing data indicating times associated with occurrence of a first plurality of current events, identifying one or more potentially recurring series of events based at least in part on the current event timing data, and determining, using the trained machine learning model, whether or not to identify each of the one or more potentially recurring series of events as a confirmed recurring series of events. In some aspects, execution of the instructions for identifying the one or more potentially recurring series of events causes the system to perform operations further including identifying a first plurality of statistically recurring series of events based at least in part on a Fourier transform of the current event timing data and applying one or more heuristic filters to the statistically recurring series of events.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1 shows a machine learning training system, according to some implementations.
Figure 2 shows a high-level overview of an example process flow that may be employed by the machine learning training system of Figure 1, according to some implementations.
Figure 3 shows an illustrative flow chart depicting an example operation for training a machine learning model to identify recurring events, according to some implementations.
Figure 4 shows an illustrative flow chart depicting an example operation for training a machine learning model to identify recurring events, according to other implementations.
Figure 5 shows an illustrative flow chart depicting an example operation for training a machine learning model to identify recurring events, according to some other implementations.

Like numbers reference like elements throughout the drawings and specification.

### DETAILED DESCRIPTION

Events used for training machine learning models may often be cyclical or otherwise recurring. For example, such an event may be a weekly or monthly meeting, one or more recurring transactions, one or more recurring maintenance operations, recurring deadlines, and so on. Such events may, for example, be recurring financial events, which may be helpful to predict in connection with cash flow forecasting. The cycles or recurrences may relate to temporal cycles, such as hourly, daily, weekly, monthly, quarterly, or yearly cycles.

Some conventional techniques may predict recurring transactions based on statistical analysis of historical data, for example through the use of Fourier Transforms, such as Fast Fourier Transforms, or FFTs. Such statistical analysis may structure the problem of predicting recurring events as a problem of unsupervised classification. As many events are recurring, such as appointments, transactions, deadlines, and so on, and it may be beneficial to users to predict such events as accuracy as reasonable possible, it would be desirable to improve the accuracy of predicted recurring events, beyond the accuracy of conventional statistical techniques.

Implementations of the subject matter described in this disclosure may be used to improve these statistical techniques by incorporating machine learning techniques and heuristics to improve the prediction of recurring events. Thus, in contrast to conventional statistical techniques, the example implementations improve prediction accuracy by building on the statistical analysis with heuristic filters and using the statistical analysis and heuristic filter outputs to generate training data for a machine learning model. Once trained, the machine learning model may more accurately predict recurring events as compared with the statistical analysis alone. More specifically, the example implementations may portion historical event timing data into two different portions, a first portion and a second portion, representing respective non-overlapping first and second time periods. Based on the events occurring within the first time period, example implementations may predict events occurring within the second time period. The accuracy of the predicted events is then determined in comparison to the historical events occurring within the second time period, such as using one or more heuristic filters and other techniques described below. Features for training a machine learning model may then be generated based on the subset of the predicted events determined to be sufficiently accurate.

In some aspects, the example implementations may be characterized as reconceptualizing the problem of identifying recurring events. Such a recontextualization may convert the problem of classifying the events from an unsupervised classification problem into a semi-supervised classification problem, by generating training data for solving this converted problem using statistical and heuristic analysis of historical event timing data to predict events in the historical data, and based on the accuracy of such predictions generating features for training the machine learning model to predict recurring events. In an unsupervised formation of this problem, the truth labels are unknown, meaning that whether or not the events are actually recurring is not known. The example implementations convert this problem into a semi-supervised classification problem by using statistical techniques on historical event timing data to predict recurring events within other portions of the historical event timing data, identify which events were predicted accurately, and use heuristics alongside the Fourier transformation data to identify recurring series of transactions. Such heuristic variables and Fourier transformation magnitudes and frequencies may then be used to generate training data for the machine learning model. These, and other aspects of the example implementations are discussed further below.

Various implementations of the subject matter disclosed herein provide one or more solutions to the technical problem of training a machine learning model to predict recurring events. As discussed above, conventional statistical techniques structure the problem as an unsupervised classification problem and use statistical techniques to predict when events may be recurring. In contrast, the present implementations may build and improve these statistical techniques by converting the problem to a semi-supervised classification problem and train a machine learning model using training data based on statistical analysis in addition to heuristic variables. More specifically, various aspects of the present disclosure provide a unique computing solution to a unique computing problem that did not exist prior to the use of machine learning models for generating inferences based on large data sets of event timing data. As such, implementations of the subject matter disclosed herein are not an abstract idea such as organizing human activity or a mental process that can be performed in the human mind-indeed, the human mind is not capable of training a machine learning model.

Moreover, various aspects of the present disclosure effect an improvement in the technical field of machine learning prediction by generating training data which allows a machine learning model to predict recurring events more accurately for users, as compared to conventional statistical techniques. Training the machine learning model based on such improved training data cannot be performed in the human mind, much less using pen and paper.

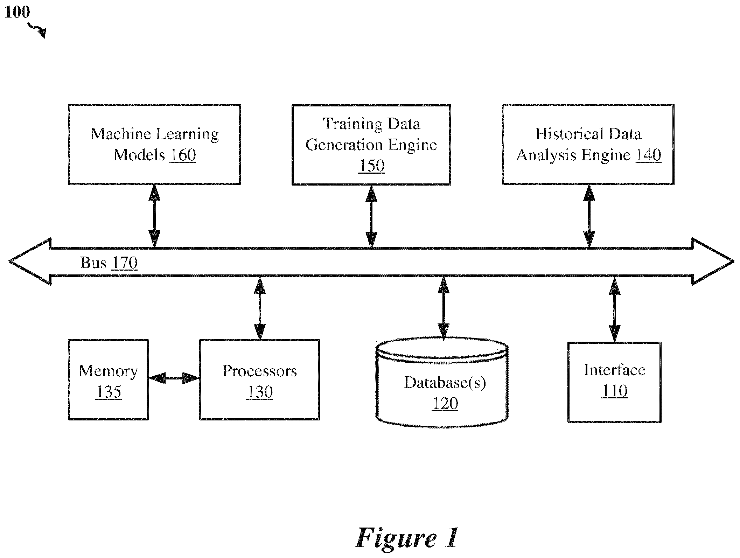

Figure 1 shows a machine learning training system 100, according to some implementations. The machine learning training system 100 is shown to include an input/output (I/O) interface 110, a database 120, one or more data processors 130, a memory 135 coupled to the data processors 130, an historical data analysis engine 140, a training data generation engine 150, and one or more machine learning models 160. In some implementations, the various components of the machine learning training system 100 may be interconnected by at least a data bus 170, as depicted in the example of Figure 1. In other implementations, the various components of the machine learning training system 100 may be interconnected using other suitable signal routing resources.

The interface 110 may include a screen, an input device, and other suitable elements that allow a user to provide information to the machine learning training system 100 and/or to retrieve information from the machine learning training system 100. Example information that can be provided to the machine learning training system 100 may include configuration information for the machine learning training system 100, configuration data for the machine learning models 160, historical event timing data for generating training data for the machine learning models 160, and so on. Example information that can be retrieved from the machine learning training system 100 may include data representing a machine learning model trained by the machine learning training system 100, prediction data generated by the machine learning training system 100, and the like.

The database 120, which may represent any suitable number of databases, may store any suitable information pertaining to training and input data for the machine learning models 160, configuration information for the machine learning training system 100, one or more rules or algorithms for training the machine learning models 160, or the like. In some implementations, the database 120 may be a relational database capable of presenting the information as data sets to a user in tabular form and capable of manipulating the data sets using relational operators. In some aspects, the database 120 may use Structured Query Language (SQL) for querying and maintaining the database 120.

The data processors 130, which may be used for general data processing operations (such as manipulating the data sets stored in the database 120), may be one or more suitable processors capable of executing scripts or instructions of one or more software programs stored in the machine learning training system 100 (such as within the memory 135). The data processors 130 may be implemented with a general-purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. In one or more implementations, the data processors 130 may be implemented as a combination of computing devices (such as a combination of a DSP and a microprocessor, a plurality of microprocessors, one or more microprocessors in conjunction with a DSP core, or any other such configuration).

The memory 135, which may be any suitable persistent memory (such as non-volatile memory or non-transitory memory) may store any number of software programs, executable instructions, machine code, algorithms, and the like that can be executed by the data processors 130 to perform one or more corresponding operations or functions. In some implementations, hardwired circuitry may be used in place of, or in combination with, software instructions to implement aspects of the disclosure. As such, implementations of the subject matter disclosed herein are not limited to any specific combination of hardware circuitry and/or software.

The historical data analysis engine 140 may analyze historical event timing data and generate statistical analysis, such as predicted recurring events, and heuristic filter data based on these predictions and the historical event timing data. Such outputs of the historical event analysis engine 140 may be used by the training data generation engine to generate training data for the machine learning models 160.

The training data generation engine 150 may generate training data for training the machine learning models 160 based on the statistical analysis, predictions, and heuristic filter data generated by the historical data analysis engine 140. The training data may, for example, be stored in the database 120.

The machine learning models 160 may include any number of machine learning models that can be used to generate inferences based on the training data generated by the training data generation engine 150. For example, historical event timing data corresponds to the timing of historical appointments or transactions, the machine learning models 160 may generate inferences regarding the timing of future occurrences of the appointments or transactions. A machine learning model can take the form of an extensible data structure that can be used to represent sets of words or phrases and/or can be used to represent sets of attributes or features. In some implementations, the machine learning models 160 may include deep neural networks (DNNs), which may have any suitable architecture, such as a feedforward architecture or a recurrent architecture. In addition, or in the alternative, the machine learning models may be based on algorithms such as logistic regression, decision trees, random forest regressors, ensembles of decision trees, and so on. In some examples, the machine learning model may specifically include XGBoost, ExtraTrees, LightGBM, NestedNet, CatBoost, and so on.

The particular architecture of the machine learning training system 100 shown in Figure 1 is but one example of a variety of different architectures within which aspects of the present disclosure may be implemented. For example, in other implementations, the machine learning training system 100 may not include the historical data analysis engine 140, the functions of which may be implemented by the processors 130 executing corresponding instructions or scripts stored in the memory 135. In some other implementations, the functions of the training data generation engine 150 may be performed by the processors 130 executing corresponding instructions or scripts stored in the memory 135. Similarly, the functions of the machine learning models 160 may be performed by the processors 130 executing corresponding instructions or scripts stored in the memory 135.

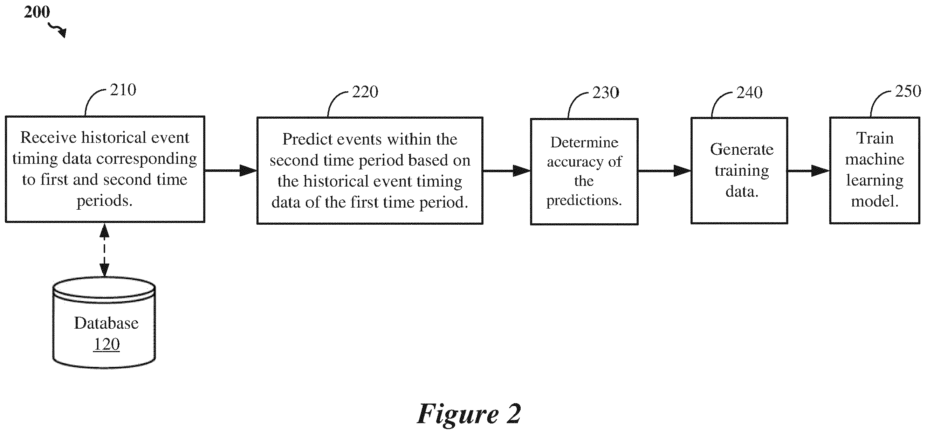

Figure 2 shows a high-level overview of an example process flow 200 that may be employed by the machine learning training system 100 of Figure 1. In block 210, the machine learning training system 100 receives historical event timing data corresponding to a first time period and a second time period. For example, the historical event timing data may be received from the database 120 or may be received via one or more network interfaces coupled to the machine learning training system 100 or retrieved from another memory coupled to the machine learning training system 100. In block 220, the machine learning training system 100 may predict events within the second time period based on the historical event timing data of the first time period. For example, as discussed in more detail below, predicting the events may include performing a statistical analysis of the historical event timing data in the first time period, such as one or more Fourier transformations based on the historical event timing data in the first time period, in order to predict the events in the second time period. In block 230, the machine learning training system 100 may determine the accuracy of the predicted events in the second time period based on the historical event timing data corresponding to the second time period. For example, predicted events may be found to be accurate predictions when they have at least a threshold similarity to corresponding events in the historical event timing data. In block 240, the machine learning training system 100 may generate training data for the machine learning model 160 based on the historical event timing data and the predictions. For example, such training data may be generated based at least in part on identifying recurring series of transactions among the events which were determined to have been accurately predicted in block 230. Generating the training data may also be based on one or more heuristic filters applied to the events determined to have been accurately predicted. In block 250, the machine learning training system 100 may train the machine learning model using the generated training data. For example, the training may train the machine learning model to predict subsequent occurrences of recurring events based on the historical event timing data.

As discussed above, users may wish to use software or other tools to predict recurring events. For example, such recurring events may be appointments, such as with a physician, preventative care or maintenance appointments, transactions, such as financial transactions, deadlines, such as tax deadlines or billing deadlines, and so on. Conventional techniques for predicting such recurring events may be based on historical data and may predict events based on statistical analysis of the historical data, such as using a Fourier transformation of the historical data indicating the timing of historical events.

However, while such conventional techniques may be used for predicting recurring events, the accuracy of prediction may be increased using the example implementations by building on the statistical analysis with heuristic filters and using the statistical analysis and heuristic filter outputs to generate training data for a machine learning model. Once trained, the machine learning model may more accurately predict recurring events as compared with the statistical analysis alone. The use of such heuristic filters may convert what is an unsupervised classification problem for the conventional techniques into a semi-supervised classification problem according to the example implementations.

For reference, in a supervised classification problem, truth labels are known for the training data. Example supervised classification problems may include prediction of quantities such as weather events ("will it rain on a given day?) or other quantities which can be clearly determined to occur or not occur ("will a purchased item be returned?"). In contrast, in unsupervised classification problems, truth labels for the training data are unknown. For example, ranking potential matches in a dating app may be an unsupervised classification problem, as the vast majority of predicted matched pairs may never meet. A semi-supervised classification problem may use training data which is partially labeled, or for which truth labels are inferred, for example using statistical techniques. More particularly, in the example implementations, labels for recurring events are not known but are inferred through statistical analysis of historical data.

The example implementations may receive historical event timing data for use in generating training data for the machine learning model. The historical event timing data may indicate times associated with the occurrence of a plurality of historical events. The historical event timing data may also include data associated with the historical events. For example, when the events are appointments, such data may indicate identification data for the event, such as a party or group with whom the appointment is with, a duration of the appointment, a location of the appointment, and so on. When the events are transactions, such data may indicate amounts associated with each transaction, a type of transaction, such as a purchase or a sale, a party with whom the transaction occurs, and so on.

The historical event timing data may be divided into two or more portions. For example, a first portion may include data relating to events which occur during a first time period, while a second portion may include data relating to events which occur during a second time period. In some aspects, the first time period may be longer, and often significantly longer, than the second time period. In some aspects, the second time period has a predetermined length, such as a predetermined number of days, weeks, or months. For example, the second time period may be three months in length. In some aspects, the second time period may be the final portion of the historical event timing data having this predetermined length. For example, when the second time period is three months, this three months may include data for events occurring within the last three months represented in the historical event timing data. In some aspects, the first time period precedes the second time period.

After receiving the historical event timing data, a statistical model may be used to predict events occurring within the second time period based on the historical event timing data corresponding to the first time period. For example, when the historical event timing data includes data for events occurring within one year, with the first time period including the first nine months, and the second time period including the final three months of the year, the statistical model may be used to predict the events occurring within this final three months based on the historical event timing data for the first nine months. Such a statistical model may be based at least in part on a Fourier transformation of at least a portion of the historical event timing data from the first time period. This Fourier transformation may be a Fast Fourier Transformation (FFT).

The outputs of this statistical model may include predicted recurring events for a specified period of time. More particularly, the outputs may include events from the first time period identified as recurring, predicted recurring events for the second time period, and may also include outputs based on the Fourier transformation, such as a plurality of magnitudes and frequencies associated with the Fourier transformation. For example, when the events are financial transactions of a user, and the historical event timing data from the first time period includes a plurality of purchases of coffee on a weekly basis, such outputs may include a plurality of transactions from the first time period, identified as a recurring weekly, a plurality of predicted transactions, predicting that the weekly transactions will continue during the second time period, in addition to Fourier transformation data, such as frequencies and magnitudes. The outputs may also indicate data associated with the transactions identified as recurring. For example, if the user's weekly coffee purchases are approximately $3 per transaction, then the predicted transactions for the second time period may also indicate that this transaction amount will continue for the predicted transactions. The predictions may also indicate a category or a specific vendor or other counterparty to the predicted event. For example, when the user's coffee purchases are all with a common vendor, such as a specific coffee shop, then the predictions may indicate that the predicted transactions will also occur with the same vendor.

After identifying recurring transactions associated with the first time period and predicting recurring transactions for the second time period, the example implementations may back-test the statistical model's predictions for the second time period against the historical event timing data for the second time period. That is, the accuracy of the events predicted to occur during the second time period may be tested against the events known to occur in the historical event timing data for the second time period. A predicted event may be identified as correct when it bears at least a threshold similarity to a corresponding historical event in the historical event timing data. For example, the threshold similarity may be found when a predicted event is within a threshold amount of time, such as a threshold number of minutes, hours, or days, to the corresponding historical event. In some aspects, the threshold similarity may be found when a predicted event is associated with an amount within a threshold amount of that of the corresponding historical event. For example, when the events are appointments, the amount may be a duration, or a cost associated with the event. Similarly, when the events are financial transactions, the threshold similarity may be based on the predicted transaction having within a threshold dollar amount to the corresponding historical transaction. In some other aspects, rather than the threshold similarity being found based on a threshold amount or a threshold time period, the similarity may be found based on one or more percentages associated with the comparison. For example, the threshold similarity may be found when a predicted transaction is within a predetermined percentage of the amount of the corresponding transaction, such as within 10% of the amount of the corresponding transaction.

A series of predicted events may be identified as a recurring series of events when at least a threshold proportion of the predicted events have at least the threshold similarity to corresponding events of the historical event timing data. For example, the threshold proportion may be 50%, such that when more than half of the events predicted to occur during the second time period have at least the threshold similarity to corresponding historical events of the historical event timing data for the second time period.

After identifying the recurring series of events, features may be generated for inclusion in training data for the machine learning model. More particularly, one or more heuristic filters may be used for generating these model features. For example, such a heuristic filter may filter the identified recurring series of events, to include only those series satisfying one or more criteria. In some aspects, the events may occur between a user and a counterparty, such as the user having an appointment with the counterparty, or the user engaging in a transaction with the counterparty. For such events, in some examples the criteria may be that the number of unique days on which the events in the recurring series occur within the historical event timing data between the user and the counterparty must be at least a threshold proportion of the total unique days on which events occur between the user and the counterparty. In some aspects the threshold proportion may be 55%. Thus, this example criterion may be met for a series of transactions between the user and a coffee shop when the number of days on which the transactions occur in the identified series between the user and the coffee shop is at least 55% of the total days on which the user engages in transactions with the coffee shop.

In some aspects, the model features may include variables related to these heuristic filters. For example, the threshold proportion (such as 55%) may be included as one of the model features. Additionally, the model features may include magnitudes and frequencies associated with the Fourier transform, such as an FFT, of at least a portion of the historical event timing data, and statistical features of the FFT, such as a peak magnitude of the FFT, a difference between a top number, such as ten, peaks of the FFT magnitude, and so on. The model features may further include the number of transactions for each identified series of transactions. The model features may further include amounts or other quantities associated with the events, such as transaction amounts when the events are financial transactions, costs associated with the events, and so on. Such amounts may be positive or negative in some implementations, such as an amount of income or a cost associated with the events. The model features may further include an indication of whether a given series has an exact recurring amount or an approximate or fuzzy recurring amount.

The machine learning model may then be trained based on the generated training data. Use of the trained machine learning model may be combined with the statistical and heuristics to improve identification of recurring series of events. More particularly, after training the machine learning model, subsequent event timing data may be received, including timing and other information for a plurality of subsequent events, such as appointments or transactions. The statistical analysis, such as the Fourier transform based analysis, and the heuristic rules described above may be used to identify potentially recurring series of events in the subsequent event timing data. Information about the potentially recurring series of events identified using the statistical and heuristic techniques may then be provided to the trained machine learning model, which may be used to make a final determination as to whether or not the potentially recurring series of events is actually a recurring series of events.

As mentioned above, the example implementations may be useful for improving forecasting of a variety of events, such as financial transactions. Forecasting of such financial transactions may be used in connection with cash flow forecasting using accounting software. Aspects of the example implementations may aid users of such accounting software in predicting future recurring financial transactions based on records of previous financial transactions. For example, the QuickBooks accounting software, developed by Intuit, Inc. of Mountain View California, is one example of such accounting software which may more accurately predict recurring transactions through application of the example implementations. Such accounting software may maintain records of users' previous financial transactions, and whereas conventional techniques may predict future transactions based on statistical techniques the example implementations may improve such predictions by incorporating a machine learning model in addition to such statistical techniques, as discussed above. More particularly, the user's previous financial transactions may be considered as occurring within the first time period and the second time period. Transactions occurring within the second time period may be predicted based on the records of the transactions occurring within the first time period, and the accuracy of such predictions may be determined as discussed above. The training data is then generated, for example by identifying which predicted financial transactions are part of a recurring series of transactions, and generating features for inclusion in the training data based on one or more heuristic filters or related variables. The training data may then be used for training the machine learning model, and the trained machine learning model may be used in connection with cash flow forecasting features of the accounting software to better predict the user's future cash flows by incorporating aspects of predicted recurring financial transactions.

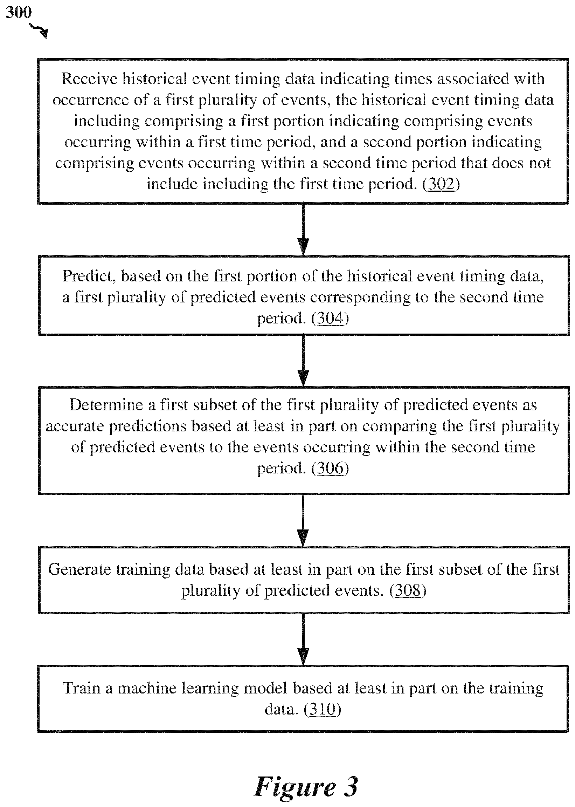

Figure 3 shows an illustrative flow chart depicting an example operation 300 for training a machine learning model to identify recurring events, according to some implementations. The example operation 300 may be performed by one or more processors of a computing device, and in some implementations, the example operation 300 may be performed using the machine learning training system 100 of Figure 1. It is to be understood that the example operation 300 may be performed by any suitable systems, computers, or servers.

At block 302, the machine learning training system 100 receives historical event timing data indicating times associated with occurrence of a first plurality of events, the historical event timing data including a first portion indicating events occurring within a first time period and a second portion indicating events occurring within a second time period that does not include the first time period. At block 304, the machine learning training system 100 predicts, based on the first portion of the historical event timing data, a first plurality of predicted events corresponding to the second time period. At block 306, the machine learning training system 100 determines a first subset of the first plurality of predicted events to be accurate predictions based at least in part on comparing the first plurality of predicted events to the events occurring within the second time period. At block 308 the machine learning training system 100 generates training data based at least in part on the first subset of the first plurality of predicted events. At block 310, the machine learning training system 100 trains the machine learning model based at least in part on the training data.

In some instances, predicting the first plurality of predicted events in block 304 includes generating a first Fourier transform based on the first portion of the historical event timing data. The training data may include magnitudes and frequencies associated with the first Fourier transform.

In other instances, the first subset of the first plurality of predicted events includes the predicted events having at least a threshold similarity to corresponding events occurring within the second time period. In some aspects, the threshold similarity is determined based at least in part on a predicted event having a date within a threshold time period of a corresponding event within the second time period. In some aspects, the threshold similarity is determined based at least in part on a predicted event corresponding to an amount within a threshold amount of a corresponding event within the second time period. In some aspects, the threshold similarity is determined based at least in part on a predicted event having a common identifier with a corresponding event within the second time period.

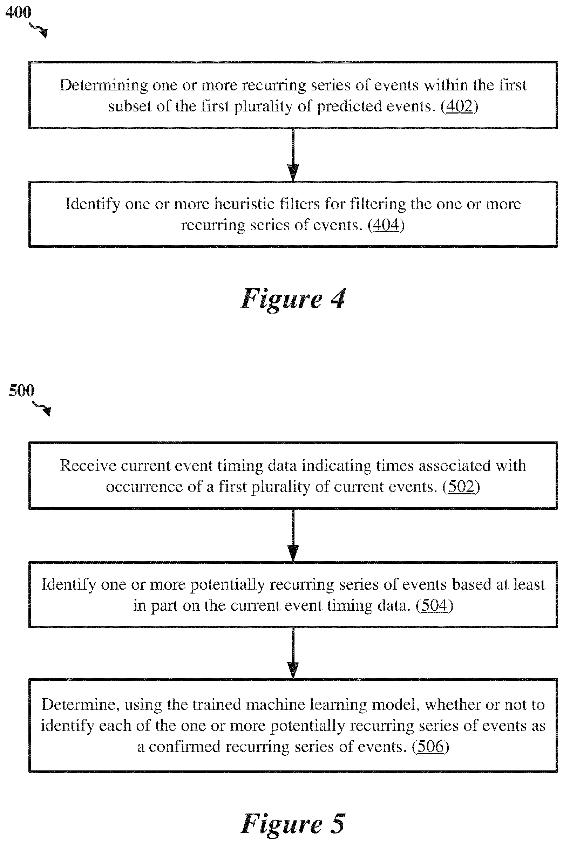

Figure 4 shows an illustrative flow chart depicting an example operation 400 for training a machine learning model to identify recurring events, according to other implementations. The example operation 400 may be performed by one or more processors of a computing device, and in some implementations, the example operation 400 may be performed using the machine learning training system 100 of Figure 1. It is to be understood that the example operation 400 may be performed by any suitable systems, computers, or servers. In some instances, the example operation 400 may be performed after the example operation 300 of Figure 3.

The operation 400 begins at 402 with the machine learning training system 100 determining one or more recurring series of events within the first subset of the first plurality of predicted events. In some instances, each recurring series of events includes events occurring at an identified periodicity, and at least a threshold proportion of the predicted events in a recurring series have at least the threshold similarity to corresponding events within the second time period. At 404, the machine learning training system 100 identifies one or more heuristic filters for filtering the one or more recurring series of events, where the one or more heuristic filters are configured to identify a subset of the one or more recurring series of events. In some aspects, the events within the one or more recurring series of events include transactions between a first transacting party and a second transacting party, and the one or more heuristic filters are based on a rule that a number of unique days on which the transactions occur in a recurring series of events is at least a threshold proportion of a total number of unique days that the first party transacts with the second party.

Figure 5 shows an illustrative flow chart depicting an example operation 500 for training a machine learning model to identify recurring events, according to some other implementations. The example operation 500 may be performed by one or more processors of a computing device, and in some implementations, the example operation 500 may be performed using the machine learning training system 100 of Figure 1. It is to be understood that the example operation 500 may be performed by any suitable systems, computers, or servers. In some instances, the example operation 500 may be performed after the example operation 300 of Figure 3.

The operation 500 begins at 502 with the machine learning training system 100 receiving current event timing data indicating times associated with occurrence of a first plurality of current events. At 504, the machine learning training system 100 identifies one or more potentially recurring series of events based at least in part on the current event timing data. At 506, the machine learning training system 100 determines, using the trained machine learning model, whether or not to identify each of the one or more potentially recurring series of events as a confirmed recurring series of events. In some aspects, identifying the one or more potentially recurring series of events includes identifying a first plurality of statistically recurring series of events based at least in part on a Fourier transform of the current event timing data, and applying one or more heuristic filters to the statistically recurring series of events.

As used herein, a phrase referring to "at least one of' a list of items refers to any combination of those items, including single members. As an example, "at least one of: a, b, or c" is intended to cover: a, b, c, a-b, a-c, b-c, and a-b-c.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus.

If implemented in software, the functions may be stored on or transmitted over as one or more instructions or code on a computer-readable medium. The processes of a method or algorithm disclosed herein may be implemented in a processor-executable software module which may reside on a computer-readable medium. Computer-readable media includes both computer storage media and communication media including any medium that can be enabled to transfer a computer program from one place to another. A storage media may be any available media that may be accessed by a computer. By way of example, and not limitation, such computer-readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer-readable medium. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and instructions on a machine readable medium and computer-readable medium, which may be incorporated into a computer program product.

Various modifications to the implementations described in this disclosure may be readily apparent to those skilled in the art, and the generic principles defined herein may be applied to other implementations without departing from the scope of this disclosure. Thus, the claims are not intended to be limited to the implementations shown herein but are to be accorded the widest scope consistent with this disclosure, the principles and the novel features disclosed herein.

Further examples of feature combinations taught by the present disclosure are set out in the following numbered clauses:
1. A method for training a machine learning model to identify recurring events, the method performed by a computing device coupled to the machine learning model and comprising:
   receiving historical event timing data indicating times associated with occurrence of a first plurality of events, the historical event timing data including a first portion indicating events occurring within a first time period and a second portion indicating events occurring within a second time period that does not include the first time period;
   predicting, based on the first portion of the historical event timing data, a first plurality of predicted events corresponding to the second time period;
   determining a first subset of the first plurality of predicted events as accurate predictions based at least in part on comparing the first plurality of predicted events to the events occurring within the second time period;
   generating training data based at least in part on the first subset of the first plurality of predicted events; and
   training the machine learning model based at least in part on the training data.
2. The method of clause 1, wherein predicting the first plurality of predicted events comprises generating a first Fourier transform based on the first portion of the historical event timing data.
3. The method of clause 2, wherein the training data comprises magnitudes and frequencies associated with the first Fourier transform.
4. The method of any preceding clause, wherein the first subset of the first plurality of predicted events comprises the predicted events having at least a threshold similarity to corresponding events occurring within the second time period.
5. The method of clause 4, wherein the threshold similarity is determined based at least in part on a predicted event having a date within a threshold time period of a corresponding event within the second time period.
6. The method of clause 4 or clause 5, wherein the threshold similarity is determined based at least in part on a predicted event corresponding to an amount within a threshold amount of a corresponding event within the second time period.
7. The method of any of clauses 4 to 6, wherein the threshold similarity is determined based at least in part on a predicted event having a common identifier with a corresponding event within the second time period.
8. The method of any of clauses 4 to 7, further comprising:
   determining one or more recurring series of events within the first subset of the first plurality of predicted events, wherein each recurring series of events contains events occurring at an identified periodicity, and wherein at least a threshold proportion of predicted events in a recurring series have at least the threshold similarity to the corresponding events within the second time period.
9. The method of clause 8, wherein generating the training data further comprises:
   identifying one or more heuristic filters for filtering the one or more recurring series of events, wherein the one or more heuristic filters are configured to identify a subset of the one or more recurring series of events.
10. The method of clause 9, wherein the events within the one or more recurring series of events include transactions between a first transacting party and a second transacting party, and the one or more heuristic filters are based on a rule that a number of unique days on which the transactions occur in a respective recurring series of events is at least a threshold proportion of a total number of unique days that the first party transacts with the second party.
11. The method of any preceding clause, further comprising:
   receiving current event timing data indicating times associated with occurrence of a first plurality of current events;
   identifying one or more potentially recurring series of events based at least in part on the current event timing data; and
   determining, using the trained machine learning model, whether or not to identify each of the one or more potentially recurring series of events as a confirmed recurring series of events.
12. The method of clause 11, wherein identifying the one or more potentially recurring series of events comprises:
   identifying a first plurality of statistically recurring series of events based at least in part on a Fourier transform of the current event timing data; and
   applying one or more heuristic filters to the statistically recurring series of events.
13. A system for training a machine learning model to identify recurring events, the system associated with the machine learning model and comprising:
   one or more processors; and
   a memory storing instructions that, when executed by the one or more processors, cause the system to perform operations including:
      receiving historical event timing data indicating times associated with occurrence of a first plurality of events, the historical event timing data including a first portion indicating events occurring within a first time period and a second portion indicating events occurring within a second time period that does not include the first time period;
      predicting, based on the first portion of the historical event timing data, a first plurality of predicted events corresponding to the second time period;
      determining a first subset of the first plurality of predicted events as accurate predictions based at least in part on comparing the first plurality of predicted events to the events occurring within the second time period;
      generating training data based at least in part on the first subset of the first plurality of predicted events; and
      training the machine learning model based at least in part on the training data.
14. The system of clause 13, wherein the first subset of the first plurality of predicted events comprises the predicted events having at least a threshold similarity to corresponding events occurring within the second time period.
15. The system of clause 14, wherein the threshold similarity is determined based at least in part on a predicted event having a date within a threshold time period of a corresponding event within the second time period.
16. The system of clause 14 or clause 15, wherein the threshold similarity is determined based at least in part on a predicted event corresponding to an amount within a threshold amount of a corresponding event within the second time period.
17. The system of any of clauses 14 to 16, wherein the threshold similarity is determined based at least in part on a predicted event having a common identifier with a corresponding event within the second time period.
18. The system of any of clauses 14 to 17, wherein execution of the instructions causes the system to perform operations further including:
   determining one or more recurring series of events within the first subset of the first plurality of predicted events, wherein each recurring series of events contains events occurring at an identified periodicity, and wherein at least a threshold proportion of predicted events in a recurring series have at least the threshold similarity to the corresponding events within the second time period.
19. The system of clause 18, wherein the events within the one or more recurring series of events include transactions between a first transacting party and a second transacting party, and the one or more heuristic filters are based on a rule that a number of unique days on which the transactions occur in a respective recurring series of events is at least a threshold proportion of a total number of unique days that the first party transacts with the second party.
20. The system of clause 19, wherein execution of the instructions for identifying the one or more potentially recurring series of events causes the system to perform operations further including:
   identifying a first plurality of statistically recurring series of events based at least in part on a Fourier transform of the current event timing data; and
   applying one or more heuristic filters to the statistically recurring series of events.

## Claims

1. A method for training a machine learning model to identify recurring events, the method
performed by a computing device coupled to the machine learning model and comprising:
receiving historical event timing data indicating times associated with occurrence of a first plurality of events, the historical event timing data including a first portion indicating events occurring within a first time period and a second portion indicating events occurring within a second time period that does not include the first time period;
predicting, based on the first portion of the historical event timing data, a first plurality of predicted events corresponding to the second time period;
determining a first subset of the first plurality of predicted events as accurate predictions based at least in part on comparing the first plurality of predicted events to the events occurring within the second time period;
generating training data based at least in part on the first subset of the first plurality of predicted events; and
training the machine learning model based at least in part on the training data.

2. The method of claim 1, wherein predicting the first plurality of predicted events comprises generating a first Fourier transform based on the first portion of the historical event timing data.

3. The method of claim 2, wherein the training data comprises magnitudes and frequencies associated with the first Fourier transform.

4. The method of any preceding claim, wherein the first subset of the first plurality of predicted events comprises the predicted events having at least a threshold similarity to corresponding events occurring within the second time period.

5. The method of claim 4, wherein the threshold similarity is determined based at least in part on a predicted event having a date within a threshold time period of a corresponding event within the second time period.

6. The method of claim 4 or claim 5, wherein the threshold similarity is determined based at least in part on a predicted event corresponding to an amount within a threshold amount of a corresponding event within the second time period.

7. The method of any of claims 4 to 6, wherein the threshold similarity is determined based at least in part on a predicted event having a common identifier with a corresponding event within the second time period.

8. The method of any of claims 4 to 7, further comprising:
determining one or more recurring series of events within the first subset of the first plurality of predicted events, wherein each recurring series of events contains events occurring at an identified periodicity, and wherein at least a threshold proportion of predicted events in a recurring series have at least the threshold similarity to the corresponding events within the second time period.

9. The method of claim 8, wherein generating the training data further comprises:
identifying one or more heuristic filters for filtering the one or more recurring series of events, wherein the one or more heuristic filters are configured to identify a subset of the one or more recurring series of events.

10. The method of claim 9, wherein the events within the one or more recurring series of events include transactions between a first transacting party and a second transacting party, and the one or more heuristic filters are based on a rule that a number of unique days on which the transactions occur in a respective recurring series of events is at least a threshold proportion of a total number of unique days that the first party transacts with the second party.

11. The method of any preceding claim, further comprising:
receiving current event timing data indicating times associated with occurrence of a first plurality of current events;
identifying one or more potentially recurring series of events based at least in part on the current event timing data; and
determining, using the trained machine learning model, whether or not to identify each of the one or more potentially recurring series of events as a confirmed recurring series of events.

12. The method of claim 11, wherein identifying the one or more potentially recurring series of events comprises:
identifying a first plurality of statistically recurring series of events based at least in part on a Fourier transform of the current event timing data; and
applying one or more heuristic filters to the statistically recurring series of events.

13. A system for training a machine learning model to identify recurring events, the system associated with the machine learning model and comprising:
one or more processors; and
a memory storing instructions that, when executed by the one or more processors, cause the system to perform operations including:
receiving historical event timing data indicating times associated with occurrence of a first plurality of events, the historical event timing data including a first portion indicating events occurring within a first time period and a second portion indicating events occurring within a second time period that does not include the first time period;
predicting, based on the first portion of the historical event timing data, a first plurality of predicted events corresponding to the second time period;
determining a first subset of the first plurality of predicted events as accurate predictions based at least in part on comparing the first plurality of predicted events to the events occurring within the second time period;
generating training data based at least in part on the first subset of the first plurality of predicted events; and
training the machine learning model based at least in part on the training data.

14. The system of claim 13, wherein the memory further stores instructions that, when executed by the one or more processors, cause the system to perform the method of any of claims 2 to 12.
